# EUROPEAN PATENT APPLICATION

(11) **EP 4 738 420 A1**
(43) Date of publication of application: **06.05.2026**
(21) Application number: 25383169.7
(22) Date of filing: 29.10.2025
(51) Int. Cl.: H01H 85/00, H02B 13/025, H01H 85/43, H01H 85/30, H02B 11/26, H02B 13/035

(54) **GAS-INSULATED HIGH-VOLTAGE ELECTRICAL SWITCHGEAR WITH OVERPRESSURE RELIEF**

(30) Priority: 30.10.2024 ES 202432007 U
(71) Applicant: Ormazabal Corporate Technology, A.I.E., 48340 Amorebieta-Etxano (Vizcaya) (ES)
(72) Inventor: FERNÁNDEZ URIEN, Andoni, 48340 Amorebieta-Etxano (Vizcaya) (ES); BARRIO RODRIGUEZ, Sergio, 48340 Amorebieta-Etxano (Bizkaia) (ES); LARRIETA ZUBIA, Javier, 48340 Amorebieta-Etxano (Bizkaia) (ES)
(74) Representative: Herrero & Asociados, S.L.

(57) **Abstract**

Gas-insulated high-voltage electrical switchgear comprising a gas-insulated enclosure (1), comprising:
- a switching means (2) with at least one making/breaking, disconnecting, or grounding function;
- a protective element (3) inside a housing (4) contained within a removable fuse holder (5), said housing (4) being mounted between the switching means (2) and at least one shunt busbar (7); and
- a plug (9) being part of the same removable fuse holder (5) and that seals the housing (4) by means of an elastic element (10).

The switchgear includes an overpressure relief device (8) between the interior space (13) of the housing (4) and the exterior (14) of the enclosure (1). The elastic element (10) of the plug (9) is located where the device (8) is installed.

## Description

### OBJECT OF THE INVENTION

The present invention is applied in the field of electrical power distribution facilities, in particular, it refers to a gas-insulated high-voltage electrical switchgear that has an overpressure relief device integrated into the housing wherein an overload and short-circuit protective element is incorporated.

The object of the invention is to keep the housing wherein the protective element is incorporated watertight while allowing the evacuation of excess gas when there is overpressure inside said housing without the protective element having been activated, and thus avoiding the activation of a mechanism for driving a switching means or personal injury when replacing the protective element.

### BACKGROUND OF THE INVENTION

Currently, high-voltage electrical switchgear used in power distribution networks is installed in enclosures that are usually made of metal, called cells. This switchgear includes switching means, such as circuit breakers, that perform the functions of making/breaking, disconnecting, and grounding the installation. Thus, in cases where there is, for example, a fault in the distribution line, an outage due to construction work, maintenance, or load distribution optimization, these switching means can be activated to obtain the desired electrical power distribution, prevent consumers from being left without power, or ensure the protection of people and electrical equipment, such as transformers.

In addition to the switching means, electrical switchgear also includes elements for protection against overloads and short circuits, such as fuses. The great advantage of fuses is their rapid response in the event of a short circuit. Consequently, they effectively protect electrical switchgear and electrical equipment, such as distribution transformers, against the dynamic and thermal effects of short circuits. Therefore, an enclosure incorporating electrical switchgear may comprise at least one switching means, such as a load break switch that performs the functions of making/breaking, disconnecting, and grounding, and at least one protective element, such as a fuse. The protective element is installed inside a housing, also known as a fuse holder tube, with the protective element specifically housed in a removable fuse holder base inside said housing. Generally, the switching means is installed between at least one main circuit busbar and the housing that incorporates the protective element, while the protective element housing is installed between the switching means and at least one shunt busbar.

In the case of electrical switchgears comprising a switching means and a protective element, such as a series fuse installed downstream of said switching means, there are two types of protection functions: associated fuses and combined fuses. In the first case, that of associated fuses, if one of the fuses blows, the switching means does not open, so the other two phases continue to operate. In contrast, in the second case, that of combined fuses, when any of the fuses blows, the switching means completely cuts off the power supply. In the case of combined fuses, when a fuse blows, it releases a small piece called a striker, which causes the deformation of an elastic element by contact, which in turn triggers a mechanism that activates the switching means so that it opens the circuit, leaving the three phases without power.

As mentioned above, part of the electrical switchgear, such as the switching means, main circuit busbars, and shunt busbars, are incorporated into a metal enclosure and insulated in a gas, such as atmospheric air. The enclosure is airtight in cases where the gas used is not atmospheric air, such as sulfur hexafluoride (SF6), dry air, nitrogen, CO2, etc.

Regarding the type of gas used, it is worth mentioning that the most commonly used gas in recent years is SF6 gas due to its excellent dielectric properties and, among many other advantages, the fact that it is not toxic to people. However, this gas has a significant environmental impact due to its high greenhouse gas potential (GWP = 22,800). For this reason, in recent years alternative gases have been sought, such as dry air, N2, O2, or CO2, or mixtures of fluoroketones with gases such as CO2, N2, 02, air, or mixtures thereof, that can replace SF6 gas in this type of electrical switchgear.

Likewise, the same insulating medium, such as a dielectric gas mentioned above, in some cases also allows the extinction of the electric arc generated between the switch contacts during opening and closing operation.

One of the objectives of using a dielectric insulating gas is to reduce the distance between phases, that is, the distance between live parts under voltage, such as the distance between the main circuit bars or between shunt busbars, in order to achieve a more compact enclosure that is insensitive to external or environmental conditions such as pollution or humidity.

Therefore, in order to maintain the same dimensions of the electrical switchgear as with the use of SF6 or to reduce them, the pressure in the enclosures or hermetically sealed compartments of the electrical switchgear is usually increased, maintaining the same distances between conductive parts or reducing them as much as possible. This implies the need to measure certain magnitudes inside the airtight compartments of the electrical switchgear, such as pressure and temperature. If measuring the pressure of SF6 gas in these sealed enclosures is currently required to detect overpressures or leaks, for example, this is even more critical when using alternative gases to SF6, which require a higher filling pressure for the sealed enclosures. This increase in the filling pressure of the hermetic enclosures can pose a problem that did not exist until now with SF6 filling pressures, namely, in the event of a leak of the insulating gas from the hermetic enclosure into the fuse holder tube, the elastic element of the fuse holder tube deforms due to the increase in internal pressure, causing the operating mechanism of the control device to activate even though no fuse has blown. Furthermore, after the switching means has been activated and the three-phase circuit has been opened, the pressure inside the fuse holder tube may continue to rise until it reaches equilibrium pressure with the new volume of gas (enclosure plus fuse holder tube). This pressure, which is on the order of the filling pressure, could injure an operator attempting to replace the fuse.

In this regard, we can cite the solution defined in German patent application DE4116058A1, wherein the elastic element of the fuse holder tube comprises a pressure compensation hole that prevents an increase in pressure inside the fuse holder tube, and therefore prevents a possible bulging or deformation of the elastic element itself caused by an excess of air pressure inside the fuse holder tube, which would cause an incorrect response of the operating mechanism of the switching means. The pressure compensation hole is closed when the elastic element is at rest, when it has no movement, while the pressure compensation hole opens when the elastic element moves or deforms, thus releasing the excess air that increases the internal pressure of the fuse holder tube.

### DESCRIPTION OF THE INVENTION

The present invention is applied within the field of electrical power distribution facilities, in particular, it refers to a gas-insulated high-voltage electrical switchgear with overpressure relief, for example, electrical switchgear used in electrical transformer substations, distribution stations, substations, etc. Specifically, the electrical switchgear comprises an overpressure relief device applicable to electrical switchgear installed in gas-insulated enclosures or cells, wherein the electrical switchgear includes within the enclosure at least one switching means, such as a load break switch or short-circuit current switch with at least one making/breaking, disconnecting, and grounding function, and at least one overload and short-circuit protective element, such as a fuse incorporated in a housing or fuse holder tube, housed in a removable fuse holder that forms part of the same fuse holder tube, the switching means and the protective element being installed in series between at least one main circuit busbar and at least one shunt busbar. The housing incorporating the protective element is mounted between the switching means and at least one shunt busbar.

The overpressure relief device of the invention solves each and every one of the problems mentioned above, and therefore, the overpressure relief device keeps the housing or fuse holder tube sealed under normal operating conditions of the electrical switchgear while allowing the instantaneous evacuation of a flow of gas in case of excess pressure inside said housing or fuse holder tube. The overpressure relief device is installed between the interior of the housing or fuse holder tube and the exterior of the electrical switchgear enclosure, that is, between the inner volume of the fuse holder tube and the atmosphere, so that the evacuated gas flows out of the electrical switchgear enclosure. For example, it may be installed in the removable fuse holder base on a plug that is part of the same removable fuse holder base and that hermetically seals the fuse holder tube when the protective element is installed. The overpressure relief device may consist of a non-return valve, a vent plug or a vent filter that allows the internal pressure of the housing or fuse holder tube of the protective element to be kept within certain values.

It has been foreseen to install the overpressure relief device in an elastic element that acts as a sealing gasket between the interior of the housing or fuse holder tube and the exterior of the electrical switchgear enclosure, or installed in an insulating piece comprising the removable fuse holder base plug that closes the housing. Therefore, in the event of a gas leak from the gas-insulated enclosure into the housing of the protective element, causing an increase in pressure inside the housing, the elastic element will not deform and therefore no operating mechanism of the switching means will be activated, since the overpressure relief device will allow the evacuation of part of the filtered gas, which will be evacuated to the outside of the housing of the protective element.

In short, an increase in the filling pressure of the electrical switchgear enclosures will not contribute to incorrect operation of the switching means in the event of a gas leak in the protective element's housing. Therefore, the purpose of the overpressure relief device is to evacuate a flow of gas in the event of excess pressure inside the protective element's housing, preventing deformation of the elastic element and the consequent activation of the switching mean's operating mechanism without the protective element having acted or blown. In this way, the switching means will only be activated if any of the fuses blow, not due to overpressure in the protective element's housing.

Furthermore, due to the evacuation of excess gas from inside the housing of the protective element, the pressure is prevented from continuing to increase, thus avoiding any risk of personal injury, for example, when an operator replaces a protective element.

### DESCRIPTION OF THE DRAWINGS

To complement the description being made and to aid in a better understanding of the features of the invention, according to a preferred embodiment thereof, a set of drawings is included as an integral part of said description, in which, for illustrative and non-limiting purposes, the following has been represented:

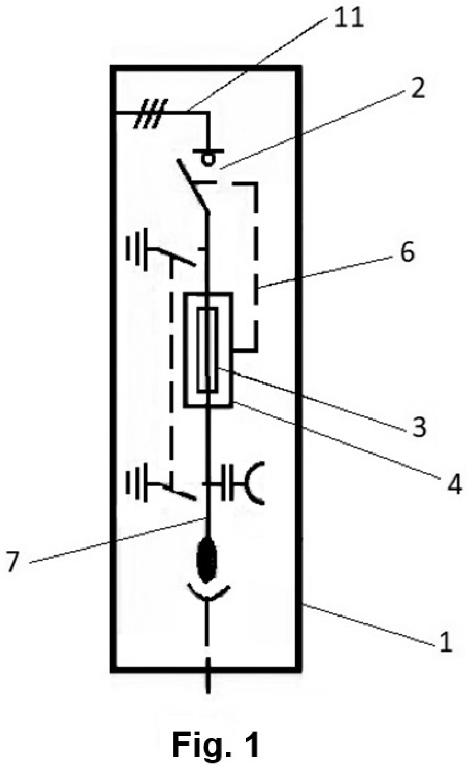

Figure 1.- Shows a single-line diagram relating to an electrical protection switchgear of the combined fuse type comprising a three-position switching means (making/breaking, disconnecting and grounding), as well as a protective element installed in series between said switching means and a shunt busbar, wherein the overpressure relief device of the invention is applicable.

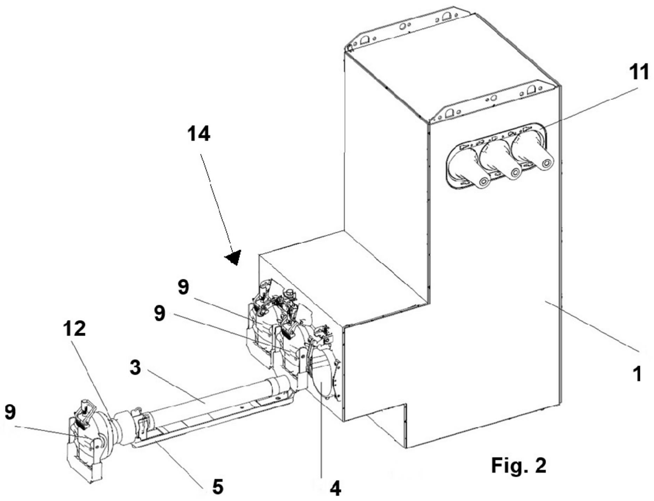

Figure 2.- Shows a perspective view of the electrical switchgear of figure 1 comprising a gas-insulated enclosure and wherein one of the fuse holder bases has been removed from the housing of the protective element for better visualization.

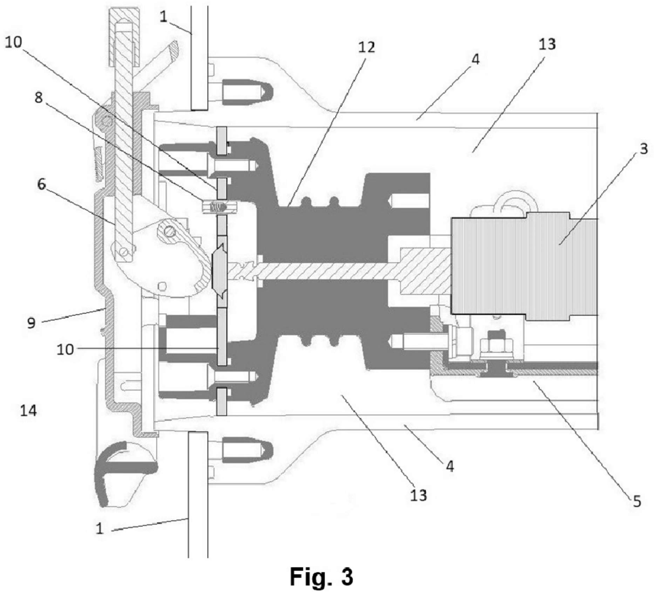

Figure 3.- Shows a detail of the sectioned front elevation view of the housing that incorporates the protective element, as well as the removable fuse holder base where the overpressure relief device is installed on the elastic element according to a first embodiment of the invention.

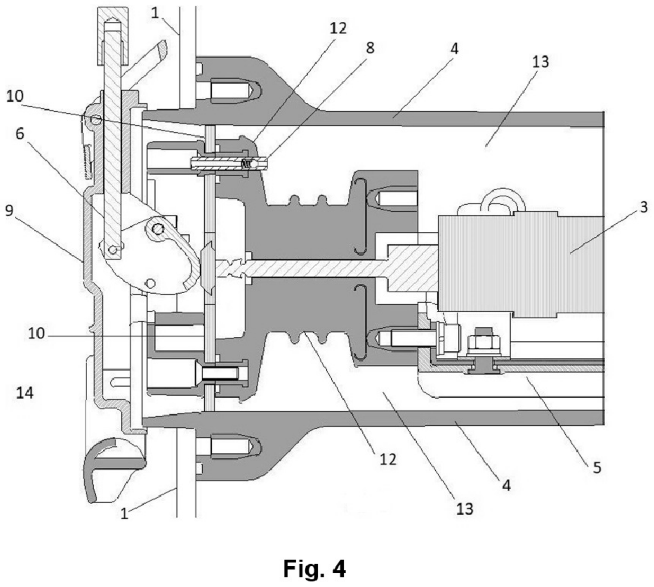

Figure 4.- Shows a detail of the sectioned front elevation view of the housing that incorporates the protective element, as well as the removable fuse holder base wherein the overpressure relief device is installed on an insulating piece of the removable fuse holder base according to a second embodiment of the invention.

### PREFERRED EMBODIMENT OF THE INVENTION

A couple of examples of preferred embodiments are described below, referring to the figures cited above, without limiting or reducing the scope of protection of the present invention.

The gas-insulated high-voltage electrical switchgear with overpressure relief of the present invention can be applied, for example, in protective electrical switchgear, such as that of the type with combined fuses, comprising a gas-insulated enclosure (1), and wherein the electrical switchgear comprises within the enclosure (1) at least one switching means (2), such as a three-position load break switch or short-circuit current switch (making/breaking, disconnecting, and grounding), and at least one overload and short-circuit protective element (3), such as a fuse incorporated in a housing (4) and housed in a removable fuse holder (5), the switching means (2) and the protective element (3) being installed in series between at least one main circuit busbar (11) and at least one shunt busbar (7), specifically, the housing (4) incorporating the protective element (3) is mounted between the switching means (2) and at least a shunt busbar (7), as shown in figures 1 to 4.

As shown in figures 3 and 4, the electrical switchgear of the invention comprises an overpressure relief device (8) installed between the interior (13) of the housing (4) and the exterior (14) of the enclosure (1) of the electrical switchgear, for example, in the removable fuse holder (5) on a plug (9) that forms part of the same removable fuse holder (5) and which hermetically seals the housing (4) when the protective element (3) is installed. In this way, the overpressure relief device (8) keeps the housing (4) hermetically sealed under normal operating conditions of the electrical switchgear while allowing the instantaneous evacuation of a flow of gas in the event of excess pressure inside said housing (4).

Specifically, as can be seen in figure 3, according to a first embodiment of the invention, the plug (9) of the removable fuse holder (5) that closes the housing (4) comprises an elastic element (10), which acts as a sealing gasket between the interior space (13) of the housing (4) and the exterior (14) of the enclosure (1) of the electrical switchgear, and wherein the overpressure relief device (8) is installed, passing through the elastic element (10) from side to side. According to a second embodiment of the invention, as shown in Figure 4, the plug (9) of the removable fuse holder (5) that closes the housing (4) comprises an insulating piece (12), which acts as a support between the protective element (3) and the plug (9), and wherein the overpressure relief device (8) is installed, passing through both the elastic element (10) and the insulating piece (12) from side to side.

The overpressure relief device (8) is capable of venting a flow of gas to the outside of the fuse holder tube or housing (4) in the event of excess pressure inside the housing (4), preventing deformation of the elastic element (10) and the subsequent actuation of the operating mechanism (6) of the switching means (2) when the protective element (3) has not been activated. Furthermore, by venting the excess gas from inside the housing (4) of the protective element (3), the pressure is prevented from increasing further, thus avoiding any risk of personal injury, for example, when an operator replaces a protective element (3). It has also been foreseen that the overpressure relief device (8) may consist of a non-return valve, a vent plug, or a vent filter that allows the internal pressure of the housing (4) of the protective element (3) to be maintained within certain values.

## Claims

1. Gas-insulated high-voltage electrical switchgear comprising a gas-insulated enclosure (1), wherein the enclosure (1) in turn comprises:
- at least one switching means (2) with at least one making/breaking - disconnecting
- grounding function;
- at least one protective element (3) incorporated inside a housing (4) contained in a removable fuse holder (5), said housing (4) being mounted between the switching means (2) and at least one shunt busbar (7); and
- a plug (9) forming part of the same removable fuse holder (5) and sealing the housing (4) by means of an elastic element (10) when the protective element (3) is incorporated;
**characterized in that** it comprises an overpressure relief device (8) installed between the inner space (13) of the housing (4) and the outer space (14) of the enclosure (1), such that the overpressure relief device (8) keeps the inner space (13) of the housing (4) airtight under normal operating conditions while allowing the instantaneous evacuation of a flow of gas in case of excess pressure inside the inner space (13) of said housing (4), and wherein the elastic element (10) of the plug (9) is arranged where the overpressure relief device (8) is installed.

2. Gas-insulated high-voltage electrical switchgear according to claim 1, **characterized in that** the overpressure relief device (8) is installed on the plug (9).

3. Gas-insulated high-voltage electrical switchgear according to claim 2, **characterized in that** the plug (9) of the removable fuse holder (5) that closes the housing (4) comprises an insulating piece (12) where the overpressure relief device (8) is installed.

4. Gas-insulated high-voltage electrical switchgear according to any of the preceding claims, **characterized in that** the overpressure relief device (8) is a non-return valve, a vent plug or a vent filter that allows the internal pressure of the housing (4) to be maintained within certain values.

5. Gas-insulated high-voltage electrical switchgear according to any of the preceding claims, **characterized in that** the protective element (3) is a fuse.

6. Gas-insulated high-voltage electrical switchgear according to any of the preceding claims, **characterized in that** the switching means (2) is a load break switch or short-circuit current switch.
